# EUROPEAN PATENT APPLICATION

(11) **EP 2 738 581 A2**
(43) Date of publication of application: **04.06.2014**
(21) Application number: 13195079.2
(22) Date of filing: 29.11.2013
(51) Int. Cl.: G02B 5/08, G02B 5/10, F24J 2/10

(54) **Concentrating solar power apparatus having mirror coating and anti-soiling coating**

(30) Priority: 30.11.2012 US 201213690035
(71) Applicant: GUARDIAN INDUSTRIES CORP., Auburn Hills, Michigan 48326-1714 (US)
(72) Inventor: Petrmichl, Rudolph Hugo, Ann Arbor, MI 48108 (US); Wang, Jiangping, Novi, MI 48377 (US)
(74) Representative: Hess, Peter K. G.

(57) **Abstract**

An anti-soiling coating is provided in a solar collector apparatus. In certain example embodiments, an anti-soiling coating and a mirror coating are provided on opposite sides of a glass substrate of a mirror structure. In certain example embodiments, the anti-soiling coating may be provided on the first/front surface of a solar panel or solar mirror used in a solar collector field. For example, the anti-soiling coating may be provided on the front/first surface of a parabolic trough or dish reflector/mirror for use in a concentrating solar power apparatus. The provision of the anti-soiling coating can protect the maximum output power of the solar collector from dust and/or environmental pollution such as dirt.

## Description

Certain example embodiments of this invention are related to a reflector for use in a solar collector or the like, the reflector having both a mirror coating and an anti-soiling coating which may also function as an anti-reflective (AR) coating.

### Background and summary of example embodiments of the invention

Solar collectors are known in the art. Example solar collectors are disclosed in U.S. Patent Nos. 8,303,124,5,347,402,4,056,313,4,117,682, 4,608,964, 4,059,094, 4,161,942, 5,275,149, 5,195,503 and 4,237,864, the disclosures of which are all hereby incorporated herein by reference. Solar collectors include at least one mirror (e.g., parabolic or other type of mirror) that reflects incident sunlight (e.g., visible and/or IR radiation) to a focal location such as a focal point at a common location. In certain example instances, a solar collector includes one or more mirrors that reflect incident sunlight and focus the light at a common location. For instance, a liquid (e.g., water, oil, and/or steam) to be heated may be positioned at the focal point of the mirror(s) so that the reflected sunlight heats the liquid (e.g., water, oil, or any other suitable liquid) and energy can be collected from the heat or steam generated by the heated liquid.

A mirror for a solar collector typically includes a mirror coating on a glass substrate. The mirror coating is typically on the rear side (second surface side) of the glass substrate, so that the glass substrate is located between the mirror coating and the sun. Thus, radiation from the sun proceeds first through the glass substrate, and is then reflected by the mirror coating back through the glass substrates and toward the common location such as a liquid or the like to be heated.

Unfortunately, soiling (including dust) deposition tends to occur on the front/first surface of the glass substrate (i.e., on the surface of the glass substrate opposite the mirror coating, and thus on the surface of the glass substrate which is closest to the sun). In environments such as hot and dry desert type terrain, dust or environmental pollution can stick to the glass surface via condensation when temperature changes and/or due to attraction by static charge. For example, in certain solar panels a general antireflective (AR) coating made via a sol gel process comprise porous silica which leads to attraction of such dust and/or environmental pollution. Such soil buildups (e.g., including dust and/or dirt) reduce light transmission through the glass substrate and therefore reduce output power. Thus, such soiling tends to lead to output power droppings of the solar collector, as it reduces the amount of radiation that can be reflected toward the common location and/or collected by a solar panel.

In certain example embodiments of this invention, an anti-soiling coating is provided in order to reduce the amount of soiling, thereby leading to improved overall reflectance and adequate power and heating for the solar collector. Advantageously, the anti-soiling coating may also function as an anti-reflective (AR) coating in certain example embodiments, based on the design of the refractive indices (n) of its respective layers. In certain example embodiments, the anti-soiling coating and mirror coating are provided on opposite sides of the glass substrate. In certain example embodiments, the anti-soiling coating may be provided on the first/front surface of a solar panel or solar mirror used in a solar collector field. For example, the anti-soiling coating may be provided on the front/first surface of a parabolic trough or dish reflector/mirror for use in a concentrating solar power apparatus. The anti-soiling coating may be provided on either a primary or secondary reflector in different embodiments of this invention. The provision of the anti-soiling coating can protect the maximum output power of the solar collector from dust and/or environmental pollution such as dirt. The anti-soiling coating includes at least one metal layer (e.g., Ag) and/or at least one transparent conductive oxide (TCO) layer (e.g., ITO), which may be combined with one or more antireflection (AR) layers in order to: (i) dissipate static in order to repel dust and/or dirt, and/or (ii) reduce reflection of radiation before the radiation reaches the mirror coating or solar panel. Such low emissivity/conductive coatings provide anti-soiling benefits by one or more of: dissipating static charge and repelling dust/dirt, and/or changing surface morphology/chemistry of the solar mirror or solar panel to reduce the chance of dust/dirt entrapment.

In certain example embodiments of this invention, there is provided a concentrating solar power apparatus comprising: a mirror for reflecting incident radiation from the sun to a common location in order to cause energy to be collected and/or generated due to radiation from the sun that is reflected by the mirror and is incident at the common location; wherein the mirror comprises a glass substrate, an anti-soiling coating, and a mirror coating, and wherein the anti-soiling coating and the mirror coating are located on opposite sides of the glass substrate.

In certain example embodiments of this invention, there is provided a mirror for use in a concentrating solar power apparatus, the mirror comprising: a glass substrate, an anti-soiling coating, and a mirror coating.

In certain example embodiments of this invention, there is provided a mirror for use in a concentrating solar power apparatus, the mirror comprising: a glass substrate, an anti-soiling coating, a mirror coating, and wherein the anti-soiling coating also functions as an anti-reflective (AR) coating due to indices of refraction (n) of its respective layers, wherein the anti-soiling coating comprises a transparent conductive oxide layer having a refractive index (n) of from 1.8 to 2.0 that is sandwiched between and contacting a first dielectric layer having a refractive index (n) of from 1.65 to 1.85 and a second dielectric layer have a refractive index (n) of from 1.5 to 1.7, wherein the first dielectric layer is located between at least the transparent conductive oxide layer and the glass substrate.

### brief description of the drawings

FIGURE 1 is a schematic diagram of a solar collector system according to an example embodiment of this invention.
FIGURE 2 is a cross sectional view of a mirror for use in the solar collector system of Fig. 1 according to an example embodiment of this invention.
FIGURE 3 is a cross sectional view of a mirror for use in the solar collector system of Fig. 1 according to an example embodiment of this invention.
FIGURE 4 is a cross sectional view of a mirror for use in the solar collector system of Fig. 1 according to an example embodiment of this invention.
FIGURE 5 is a cross sectional view of a mirror for use in the solar collector system of Fig. 1 according to an example embodiment of this invention.

### detailed description of example embodiments of the invention

Referring now more particularly to the accompanying drawings in which like reference numerals indicate like parts throughout the several views.

As used herein, the terms "on," "supported by," and the like should not be interpreted to mean that two elements are directly adjacent to or directly contacting one another unless explicitly stated. In other words, a first layer may be said to be "on" or "supported by" a second layer, even if there are one or more layers therebetween.

In certain example embodiments of this invention, an anti-soiling coating 11 is provided in order to reduce the amount of soiling, thereby leading to improved overall reflectance and adequate power and heating for the solar collector. In certain example embodiments, the anti-soiling coating 11 and mirror coating 7 are provided on opposite sides of a glass substrate 9 of a mirror structure. In certain example embodiments, the anti-soiling coating 11 may be provided on the first/front surface of a solar panel or solar mirror used in a solar collector field. For example, the anti-soiling coating 11 may be provided on the front/first surface of a parabolic trough or dish reflector/mirror 1 for use in a concentrating solar power apparatus. The anti-soiling coating 11 may be provided on either a primary or secondary reflector in different embodiments of this invention. The provision of the anti-soiling coating 11 can protect the maximum output power of the solar collector from dust and/or environmental pollution such as dirt. The anti-soiling 11 coating includes at least one metal layer (e.g., Ag) 21 and/or at least one transparent conductive oxide (TCO) layer (e.g., ITO) 20, which may be combined with one or more antireflection (AR) layers (e.g., 23, 25, 27, 29 and/or 31) in order to: (i) dissipate static in order to repel dust and/or dirt, and/or (ii) reduce reflection of radiation before the radiation reaches the mirror coating or solar panel. Such low emissivity/conductive coatings provide anti-soiling benefits by one or more of: dissipating static charge and repelling dust/dirt, and/or changing surface morphology/chemistry of the solar mirror or solar panel to reduce the chance of dust/dirt entrapment. And the anti-soiling coating may improve durability as it may reduce mechanical damage from sand abrasion in certain example embodiments. While the addition of the anti-soiling coating 11 may lower the efficiency of the mirror slightly (e.g., by about 1%) in perfectly clean environments, its savings are significant regarding reduce cleaning costs and improved performance in dirty, dusty, and/or polluted environments. Advantageously, the anti-soiling coating may also function as an anti-reflective (AR) coating in certain example embodiments, based on the design of the refractive indices (n) of its respective layers.

The mirror structures discussed herein, with mirror coating 7 and anti-soiling coating 11, may be used in applications such as one or more of: parabolic-trough power plants, compound parabolic concentrating collectors, solar dish-engine systems, solar thermal power plants, and/or solar collectors, which rely on mirror(s) to reflect and direct solar radiation from the sun. In certain example instances, the mirror(s) may be mounted on a steel or other metal based support system.

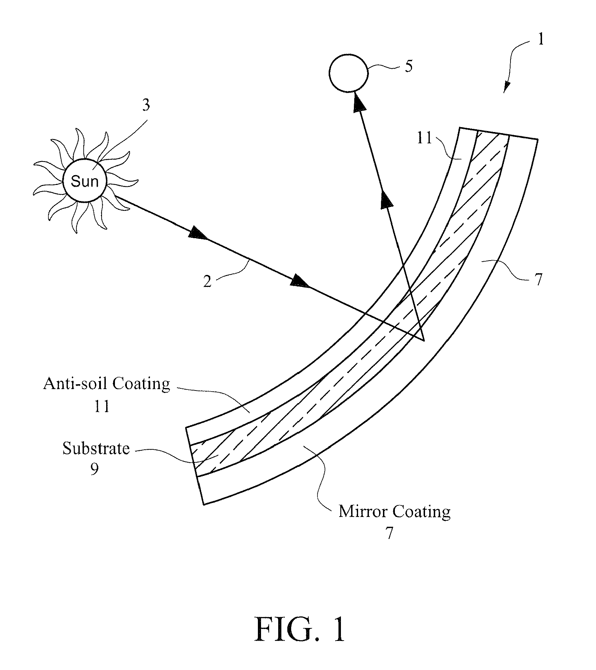

Fig. 1 is a schematic diagram of a solar collector system, or a part thereof, where a parabolic mirror 1 reflects incident light (or radiation) 2 from the sun 3 and focuses the reflected light on a common location (e.g., black body) 5 that absorbs the energy of the sun's rays and is adapted to transfer that energy to other apparatus (not shown). By way of example only, the black body 5 may be a conduit through which a liquid (e.g., water, oil and/or steam) or air flows where the liquid or air absorbs the heat for transfer to another apparatus. As another example, the black body 5 may be liquid itself to be heated, or may include one or more solar cells of a solar panel in certain example instances. The mirror 1 includes a bent/curved glass substrate 9 that supports a mirror coating 7 and an anti-soiling coating 11. This type of mirror is a second or back surface mirror, because incoming light 2 passes through the glass substrate 9 before being reflected by the mirror coating 7. Thus, reflected light passes through the glass substrate 9 twice; once before being reflected by mirror coating 7 and again after being reflected by coating 7 on its way toward the black body 5. Glass substrate 9 may be from about 1-10 mm thick, more preferably from about 2-8 mm thick, and most preferably from about 4-6 mm thick. Optionally, when the mirror 1 is of a laminate structure, another similarly bent/curved glass substrate (not shown) may be laminated (e.g., via PVB) on the rear side of coating 7 so as to sandwich the mirror coating 7 between glass substrate 9 and the another glass substrate. When the black body 5 includes a solar panel, an anti-soiling coating 11 may also or instead be provided on the light incident surface of the solar panel in order to reduce dirt/dust buildups thereon so as to allow more radiation to reach photovoltaic cells of the solar panel.

The mirror 1 may have a substantially parabolic shape, and/or may have a solar reflectance of at least 85%, more preferably of at least 88%, and most preferably of at least 89% or 90%.

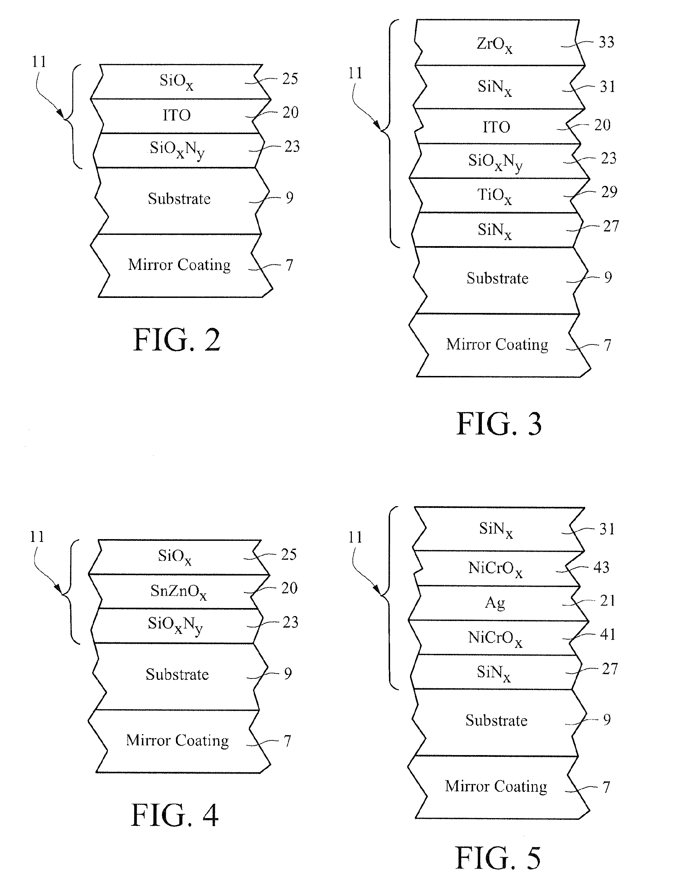

In the Fig. 1 embodiment, the mirror 1 includes a bent/curved glass substrate 9 with an anti-soiling coating 11 provided on the light incident side thereof and a mirror coating provided on the opposite side thereof. Different example anti-soiling coatings 11, which may be used in the Fig. 1 and other embodiments, are illustrated in Figs. 2-5.

Fig. 2 is a mirror (e.g., primary or secondary mirror in a solar collector appartus), that may be used in the Fig. 1 embodiment, illustrating a multi-layer anti-soiling coating 11 and mirror coating 7 on opposite sides of a glass substrate 9. Coating 11 and/or coating 7 may be deposited via sputter deposition in example embodiments. In this embodiment, dielectric layer 23 is of or includes silicon oxynitride, conductive layer 20 is a transparent conductive oxide (TCO) such as being of or including indium-tin-oxide (ITO), and dielectric layer 25 is of or includes silicon oxide (e.g., SiO₂). Any silicon nitride or silicon oxynitride inclusive layer (e.g., layer 23) herein may optionally be doped with a metal such as aluminum in certain example embodiments. For example, any silicon nitride or silicon oxynitride inclusive layer (e.g., layer 23) herein may be doped with from about 0.5-10% aluminum, more preferably from about 2-6% aluminum (atomic % for all such percentages herein). Layers 23 and 25 are provided for AR purposes, whereas conductive layer 20 is provided for anti-soiling purposes. Thus, the coating 11 functions as both an anti-soiling coating and an AR coating for the reasons explained herein. Silicon oxide layer 25 preferably has an index of refraction (n) of from about 1.5 to 1.7, more preferably from about 1.5 to 1.6, in example embodiments of this invention. Silicon oxynitride layer 23 preferably has an index of refraction (n) of from about 1.65 to 1.85, more preferably from about 1.65 to 1.75, in example embodiments of this invention. And TCO layer 20 preferably has a higher index of refraction than layers 23 and 25, e.g., an index of refraction at least about 0.2 or 0.1 higher than layers 23 and 25. In example embodiments, TCO layer 20 has an index of refraction (n) of from about 1.8 to 2.0, more preferably from about 1.85 to 1.95, with an example index being about 1.9. Refractive indices (n) herein are measured at 450 nm. In example embodiments of this invention, silicon oxynitride layer 23 is from about 10-100 nm thick, more preferably from about 20-60 nm thick, and even more preferably from about 30-50 nm thick. In example embodiments of this invention, silicon oxide inclusive layer 25 may be doped with small amounts of other material (e.g., nitrogen and/or aluminum) and is from about 10-200 nm thick, more preferably from about 40-140 nm thick, and even more preferably from about 70-110 nm thick. In example embodiments of this invention, transparent conductive ITO inclusive layer 20 is fairly thin to keep transmission high while conductive enough to provide anti-soiling functionality by dissipating static and repelling dust/dirt, and is from about 5-150 nm thick, more preferably from about 5-100 nm thick, even more preferably from about 5-50 nm thick, and most preferably from about 5-20 nm thick. Thus, in example embodiments, ITO layer 20 has a fairly high sheet resistance, which can be fairly determined based on the above thicknesses and refractive indices. In certain example embodiments, ITO layer 20 may have a sheet resistance (Rₛ) of from about 200-2,000 ohms/square, more preferably from about 500-1,500 ohms/square, even more preferably from about 700-1,200 ohms/square. Optionally, layer 23 may be of silicon nitride (e.g., Si₃N₄), which may be doped with small amounts of aluminum and/or oxygen, and may have the same thickness ranges discussed above in connection with layer 23.

Fig. 3 is a mirror (e.g., primary or secondary mirror in a solar collector appartus), that may be used in the Fig. 1 embodiment, illustrating a multi-layer anti-soiling coating 11 and mirror coating 7 on opposite sides of a glass substrate 9. Coating 11 and/or coating 7 may be deposited via sputter deposition in example embodiments. Layers 20 and 23 in the Fig. 3 embodiment are the same as the like layers 20 and 23 in the Fig. 2 embodiment discussed above (e.g., see materials, refractive indices, sheet resistances, and thicknesses for these layers discussed above in connection with the Fig. 2 embodiment). The overcoat layer 33 may be of or include zirconium oxide, aluminum oxide, aluminum nitride, and/or aluminum oxynitride in example embodiments of this invention. Dielectric layers 27 and 31 may be of or include silicon nitride (e.g., Si₃N₄), which may be doped with small amounts of aluminum and/or oxygen. Dielectric layer 29 may be of or including titanium oxide in example embodiments. Thus, ITO layer 20 is fairly thin to keep transmission high while conductive enough to provide anti-soiling functionality by dissipating static and repelling dust/dirt, while layers 27, 29, 23, and 31 are provided for AR purposes. Silicon nitride inclusive layers 27 and 31 may have a refractive index(es) of from about 1.9 to 2.1, more preferably about 2.0, in example embodiments, whereas titanium oxide layer 29 may have a refractive index (n) of from about 1.2 to 1.5, more preferably from about 1.3 to 1.5, in example embodiments. The TCO 20 may optionally be protected from the environment by a protective layer of or including zirconium oxide 33.

The following table provides example physical thicknesses and thickness ranges for the Fig. 3 example embodiment:

| | Example Thickness Range (nm) | Example Thickness (nm) |
|---|---|---|
| ZrOx (33) | 2-15 | about 5-8 |
| SiNx (31) | 10-50 | 20-40 |
| ITO (20) | 5-150 | 5-20, or about 10 |
| SiOxNy (23) | 10-200 or 10-100 | about 35-40 |
| TiOx (29) | 2-10 | about 3-5 |
| SiNx (27) | 5-40 | 10-20 |

Other TCOs may be used in place of, or in addition to, ITO for layer 20. For instance, certain example embodiments may incorporate an ITO/Ag/ITO sandwich instead of a single ITO layer. Certain example embodiments, may incorporate zinc oxide, aluminum-doped zinc oxide (AZO), tin zinc oxide (TZO), and/or the like for layer 20.

Fig. 4 is a mirror (e.g., primary or secondary mirror in a solar collector appartus), that may be used in the Fig. 1 embodiment, illustrating a multi-layer anti-soiling coating 11 and mirror coating 7 on opposite sides of a glass substrate 9. The Fig. 4 embodiment is the same as the Fig. 2 embodiment discussed above, except that tin zinc oxide is used as the TCO layer 20. Tin zinc oxide layer 20 in the Fig. 4 embodiment may be of a thickness(es) the same as those discussed above for layer 20 in connection with the Fig. 2 embodiment.

Fig. 5 is a mirror (e.g., primary or secondary mirror in a solar collector appartus), that may be used in the Fig. 1 embodiment, illustrating a multi-layer anti-soiling coating 11 and mirror coating 7 on opposite sides of a glass substrate 9. In this embodiment, dielectric layers 27 and 31 are of or include silicon nitride (e.g., Si₃N₄) which may be doped with aluminum and/or oxygen. Conductive layer 21 is a transparent conductive layer of or including silver (Ag), and contact layers 41 and 43 are of or include Ni and/or Cr. In example embodiments, one or both of layers 41, 43 may be of or including an oxide and/or nitride of Ni and/or Cr. For example, contacts layers 41 and 43 may be of or include NiCr, NiCrOₓ and/or NiCrNₓ in example embodiments. Silicon nitride inclusive layers 27 and/or 31 may optionally be doped with a metal such as aluminum in certain example embodiments, e.g., from about 0.5-10% aluminum, more preferably from about 2-6% aluminum. Layers 27 and 31 are provided for protective purposes, whereas conductive layer 21 is provided for anti-soiling purposes. In example embodiments, silicon nitride layers 27 and 31 may be from about 10-100 nm thick, more preferably from about 20-60 nm thick. In example embodiments of this invention, contact layers 41 and 43 may be from about 1-2 nm thick. In example embodiments, transparent conductive silver inclusive layer 21 may be from about 5-15 nm thick, more preferably from about 5-10 nm thick. In example embodiments, the coating and/or Ag layer 21 has a sheet resistance (Rₛ) of from about 2-50 ohms/square, more preferably from about 2-20 ohms/square, even more preferably from about 2-10 ohms/square.

The reflective mirror coating 7 in Figs. 1-5 may be a single layer mirror coating, or a multi-layer mirror coating, in different example embodiments of this invention. In single layer embodiments, the reflective mirror coating 7 may be made up of a single reflective layer of aluminum, silver, chromium, gold or the like that is sufficient to reflect the desired radiation (e.g., visible and/or IR radiation). In multi-layer embodiments, the reflective mirror coating 7 may include a reflective layer of aluminum, silver, chromium, gold or the like and other layer(s) such as silicon oxide, silicon nitride, and/or the like which may be provided over and/or under the reflective layer. Example reflective mirror coatings 7 are set forth in U.S. Patent Document Nos. 7,678,459, 2003/0179454, 2005/0083576, 10/945,430, 10/959,321, 6,783,253, 6,251,482, 3,798,050, or 6,934,085, any of which may be used herein as mirror coating 7, the disclosures of which are hereby incorporated herein by reference. In certain example mirror embodiments, the reflective layer of coating 7 (e.g., Al, Ag, Au or Cr based layer) may have an index of refraction value "n" of from about 0.05 to 1.5, more preferably from about 0.05 to 1.0. Note that the overall coating 7, but not individual layers thereof, is shown in Figs. 1-5 for purposes of simplicity. When the reflective layer of coating 7 is of or based on Al, the index of refraction "n" of the layer may be about 0.8, but it also may be as low as about 0.1 when the layer is of or based on Ag. In certain example embodiments of this invention, a reflective metallic layer of Ag may be applied at a silvering station where a silvering solution is sprayed on, the silvering solution including a silver salt and a reducing agent(s). In other example embodiments, a reflective layer of Al may be sputtered onto the glass substrate 9, directly or indirectly, using a C-MAG rotatable cathode Al inclusive target (may or may not be doped) and/or a substantially pure Al target (>= 99.5% Al) (e.g., using 2 C-MAG targets, Ar gas flow, 6 kW per C-MAG power, and pressure of 3 mTorr), although other methods of deposition for the layer may be used in different instances. The reflective layer(s) of the coating 7 in certain embodiments of this invention has a reflectance of at least 75% in the 500 nm region as measured on a Perkin Elmer Lambda 900 or equivalent spectrophotometer, more preferably at least 80%, and even more preferably at least 85%, and in some instances at least about 90% or even at least about 95%. Moreover, in certain embodiments of this invention, the reflective layer and thus coating 7 is not completely opaque, as it may have a small transmission in the visible and/or IR wavelength region of from 0.1 to 5%, more preferably from about 0.5 to 1.5%. The reflective layer of the mirror coating 7 may be from about 20-150 nm thick in certain embodiments of this invention, more preferably from about 40-90 nm thick, even more preferably from about 50-80 nm thick, with an example thickness being about 65 nm when Al is used for the reflective layer of coating 7.

In certain example embodiments, the glass substrate 9 may be substantially clear and have a high visible transmittance of at least about 85%, more preferably of at least about 88%, more preferably of at least about 89%, and possibly of at least about 90%. Moreover, the glass substrate 9 may be soda-lime-silica type glass, and may have a low iron content such as less than about 500 ppm total iron, more preferably less than about 450 ppm total iron, and still more preferably less than about 425 ppm iron. The less the iron, the more visible and/or IR light which can makes its way through the glass thereby permitting improved heating of the liquid or the like to be heated in the concentrating solar power apparatus. These features of the glass substrate 9 may or may not apply to any embodiment herein.

In alternative embodiments of this invention, the mirror coating 7 in any of Figs. 1-5 may instead be located between the glass substrate 9 and the anti-soiling coating 11, so that the mirror coating 7 can be located on the same side of the glass substrate 9 as the anti-soiling coating. In such alternative embodiments, the mirror structure would be a first surface mirror (as opposed to a second surface mirror) where the mirror coating is protected by the anti-soiling coating 11.

In certain example embodiments of this invention, there is provided a concentrating solar power apparatus comprising: a mirror for reflecting incident radiation from the sun to a common location in order to cause energy to be collected and/or generated due to radiation from the sun that is reflected by the mirror and is incident at the common location; wherein the mirror comprises a glass substrate, an anti-soiling coating, and a mirror coating, and wherein the anti-soiling coating and the mirror coating are located on opposite sides of the glass substrate.

In the concentrating solar power apparatus of the immediately preceding paragraph, the common location may comprise at least one solar panel and/or a liquid to be heated so that the reflected sunlight heats the liquid and energy is collected from the heat and/or steam generated by the heated liquid.

In the concentrating solar power apparatus of any of the preceding two paragraphs, the mirror may have a substantially parabolic shape.

In the concentrating solar power apparatus of any of the preceding three paragraphs, the mirror may have a solar reflectance of at least about 85%, more preferably of at least about 88%.

In the concentrating solar power apparatus of any of the preceding four paragraphs, a reflective layer of the mirror coating may comprise silver or aluminum. The reflective layer comprising silver or aluminum may be sandwiched between first and second dielectric layers.

In the concentrating solar power apparatus of any of the preceding five paragraphs, the glass substrate may comprise soda lime silica glass and/or have a thickness of from 1.0 to 6.0 mm.

In the concentrating solar power apparatus of any of the preceding six paragraphs, the anti-soiling coating may comprise a transparent conductive layer comprising ITO located between a first layer comprising silicon oxynitride and a second layer comprising an oxide and/or nitride of silicon, wherein the first layer comprising silicon oxynitride is located between at least the glass substrate and the transparent conductive layer comprising ITO. The second layer comprising an oxide and/or nitride of silicon may comprise silicon oxide and/or silicon nitride. The first layer comprising silicon oxynitride may be located between and directly contacting the glass substrate and the transparent conductive layer comprising ITO. The anti-soiling coating may consist essentially of the transparent conductive layer comprising ITO, the first layer comprising silicon oxynitride, and the second layer comprising an oxide and/or nitride of silicon. A layer comprising silicon nitride and a layer comprising titanium oxide may be located between the glass substrate and the first layer comprising silicon oxynitride.

In the concentrating solar power apparatus of any of the preceding seven paragraphs, the anti-soiling coating may contain a transparent conductive layer comprising ITO which is from about 5-150 nm thick, more preferably from about 5-50 nm thick, and even more preferably from about 5-20 nm thick.

In the concentrating solar power apparatus of any of the preceding eight paragraphs, the anti-soiling coating may contain a transparent conductive layer comprising ITO having a sheet resistance (Rₛ) of from about 200-2,000 ohms/square, more preferably from about 500-1,500 ohms/square, and even more preferably from about 700-1,200 ohms/square.

In the concentrating solar power apparatus of any of the preceding nine paragraphs, the anti-soiling coating may comprise a transparent conductive layer comprising or consisting essentially of ITO located between at least first and second layers comprising silicon nitride.

In the concentrating solar power apparatus of any of the preceding ten paragraphs, the anti-soiling coating may comprise a transparent conductive layer comprising or consisting essentially of silver located between at least first and second layers comprising silicon nitride.

In the concentrating solar power apparatus of any of the preceding eleven paragraphs, the anti-soiling coating may functions as an anti-reflective (AR) coating due to indices of refraction (n) of its respective layers, wherein the anti-soiling coating may comprise a transparent conductive oxide layer having a refractive index (n) of from 1.8 to 2.0 sandwiched between and contacting a first dielectric layer having a refractive index (n) of from 1.65 to 1.85 and a second dielectric layer have a refractive index (n) of from 1.5 to 1.7, wherein the first dielectric layer may be located between at least the transparent conductive oxide layer and the glass substrate. The transparent conductive oxide layer may have an index of refraction (n) at least 0.1 higher (more preferably at least 0.2 higher) than respective indices of the first and second dielectric layers.

In certain example embodiments of this invention, there is provided a mirror for use in a concentrating solar power apparatus, the mirror comprising: a glass substrate, an anti-soiling coating, a mirror coating, and wherein the anti-soiling coating also functions as an anti-reflective (AR) coating due to indices of refraction (n) of its respective layers, wherein the anti-soiling coating comprises a transparent conductive oxide layer having a refractive index (n) of from 1.8 to 2.0 that is sandwiched between and contacting a first dielectric layer having a refractive index (n) of from 1.65 to 1.85 and a second dielectric layer have a refractive index (n) of from 1.5 to 1.7, wherein the first dielectric layer is located between at least the transparent conductive oxide layer and the glass substrate.

In the mirror of the immediately preceding paragraph, the transparent conductive oxide layer may have an index of refraction (n) at least 0.1 higher (more preferably at least 0.2 higher) than respective indices of the first and second dielectric layers.

In the mirror of any of the preceding two paragraphs, the anti-soiling coating and the mirror coating may be located on opposite sides of the glass substrate.

In the mirror of any of the preceding three paragraphs, the mirror may have a solar reflectance of at least 88%.

In the mirror of any of the preceding four paragraphs, a reflective layer of the mirror coating may comprise silver or aluminum.

In the mirror of any of the preceding five paragraphs, in the anti-soiling coating, the transparent conductive layer may comprise or consist essentially of ITO, the first dielectric layer may comprise or consist essentially of silicon oxynitride which may be doped with aluminum, and the second dielectric layer may comprise or consist of silicon oxide.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

In the following, further embodiments are described to facilitate the understanding of the invention:
1. A concentrating solar power apparatus comprising:
   a mirror for reflecting incident radiation from the sun to a common location in order to cause energy to be collected and/or generated due to radiation from the sun that is reflected by the mirror and is incident at the common location;
   wherein the mirror comprises a glass substrate, an anti-soiling coating, and a mirror coating, and wherein the anti-soiling coating and the mirror coating are located on opposite sides of the glass substrate.
2. The concentrating solar power apparatus of embodiment 1, wherein the common location comprises at least one solar panel.
3. The concentrating solar power apparatus of any preceding embodiment, wherein the common location comprises a liquid to be heated so that the reflected sunlight heats the liquid and energy is collected from the heat and/or steam generated by the heated liquid.
4. The concentrating solar power apparatus of any preceding embodiment, wherein the mirror has a substantially parabolic shape.
5. The concentrating solar power apparatus of any preceding embodiment, wherein the mirror has a solar reflectance of at least 85%.
6. The concentrating solar power apparatus of any preceding embodiment, wherein the mirror has a solar reflectance of at least 88%.
7. The concentrating solar power apparatus of any preceding embodiment, wherein a reflective layer of the mirror coating comprises silver.
8. The concentrating solar power apparatus of embodiment 7, wherein the reflective layer of the mirror coating comprising silver is sandwiched between first and second dielectric layers.
9. The concentrating solar power apparatus of any of embodiments 1-6, wherein a reflective layer of the mirror coating comprises aluminum.
10. The concentrating solar power apparatus of embodiment 9, wherein the reflective layer of the mirror coating comprising aluminum is sandwiched between first and second dielectric layers.
11. The concentrating solar power apparatus of any preceding embodiment, wherein the glass substrate comprises soda lime silica glass and has a thickness of from 1.0 to 6.0 mm.
12. The concentrating solar power apparatus of any preceding embodiment, wherein the anti-soiling coating comprises a transparent conductive layer comprising ITO located between a first layer comprising silicon oxynitride and a second layer comprising an oxide and/or nitride of silicon, wherein the first layer comprising silicon oxynitride is located between at least the glass substrate and the transparent conductive layer comprising ITO.
13. The concentrating solar power apparatus of embodiment 12, wherein the first layer comprising silicon oxynitride is located between and directly contacting the glass substrate and the transparent conductive layer comprising ITO.
14. The concentrating solar power apparatus of embodiment 13, wherein the anti-soiling coating consists essentially of the transparent conductive layer comprising ITO, the first layer comprising silicon oxynitride, and the second layer comprising an oxide and/or nitride of silicon.
15. The concentrating solar power apparatus of any of embodiments 12-14, wherein the transparent conductive layer comprising ITO is from about 5-150 nm thick.
16. The concentrating solar power apparatus of any of embodiments 12-14, wherein the transparent conductive layer comprising ITO is from about 5-50 nm thick.
17. The concentrating solar power apparatus of any of embodiments 12-14, wherein the transparent conductive layer comprising ITO is from about 5-20 nm thick.
18. The concentrating solar power apparatus of any of embodiments 12-17, wherein the transparent conductive layer comprising ITO has a sheet resistance (Rₛ) of from about 200-2,000 ohms/square.
19. The concentrating solar power apparatus of any of embodiments 12-17, wherein the transparent conductive layer comprising ITO has a sheet resistance (Rₛ) of from about 500-1,500 ohms/square.
20. The concentrating solar power apparatus of any of embodiments 12-17, wherein the transparent conductive layer comprising ITO has a sheet resistance (Rₛ) of from about 700-1,200 ohms/square.
21. The concentrating solar power apparatus of any of embodiments 12-20, wherein the second layer comprising an oxide and/or nitride of silicon comprises silicon oxide.
22. The concentrating solar power apparatus of any of embodiments 12-20, wherein the second layer comprising an oxide and/or nitride of silicon comprises silicon nitride.
23. The concentrating solar power apparatus of any of embodiments 12-22, wherein the anti-soiling coating further comprises a layer comprising silicon nitride and a layer comprising titanium oxide located between the glass substrate and the first layer comprising silicon oxynitride.
24. The concentrating solar power apparatus of any of embodiments 1-11, wherein the anti-soiling coating comprises a transparent conductive layer comprising ITO located between at least first and second layers comprising silicon nitride.
25. The concentrating solar power apparatus of any of embodiments 1-11, wherein the anti-soiling coating comprises a transparent conductive layer comprising silver located between at least first and second layers comprising silicon nitride.
26. The concentrating solar power apparatus of any of embodiments 1-11, wherein the anti-soiling coating also functions as an anti-reflective (AR) coating due to indices of refraction (n) of its respective layers, wherein the anti-soiling coating comprises a transparent conductive oxide layer having a refractive index (n) of from 1.8 to 2.0 that is sandwiched between and contacting a first dielectric layer having a refractive index (n) of from 1.65 to 1.85 and a second dielectric layer have a refractive index (n) of from 1.5 to 1.7, wherein the first dielectric layer is located between at least the transparent conductive oxide layer and the glass substrate.
27. The concentrating solar power apparatus of embodiment 26, wherein the transparent conductive oxide layer has an index of refraction (n) at least 0.1 higher than respective indices of the first and second dielectric layers.
28. The concentrating solar power apparatus of embodiment 26, wherein the transparent conductive oxide layer has an index of refraction (n) at least 0.2 higher than respective indices of the first and second dielectric layers.
29. A mirror for use in a concentrating solar power apparatus, the mirror comprising:
   a glass substrate,
   an anti-soiling coating,
   a mirror coating, and
   wherein the anti-soiling coating also functions as an anti-reflective (AR) coating due to indices of refraction (n) of its respective layers, wherein the anti-soiling coating comprises a transparent conductive oxide layer having a refractive index (n) of from 1.8 to 2.0 that is sandwiched between and contacting a first dielectric layer having a refractive index (n) of from 1.65 to 1.85 and a second dielectric layer have a refractive index (n) of from 1.5 to 1.7, wherein the first dielectric layer is located between at least the transparent conductive oxide layer and the glass substrate.
30. The mirror of embodiment 29, wherein the transparent conductive oxide layer has an index of refraction (n) at least 0.1 higher than respective indices of the first and second dielectric layers.
31. The mirror of any of embodiments 29-30, wherein the transparent conductive oxide layer has an index of refraction (n) at least 0.2 higher than respective indices of the first and second dielectric layers.
32. The mirror of any of embodiments 29-31, wherein the anti-soiling coating and the mirror coating are located on opposite sides of the glass substrate.
33. The mirror of any of embodiments 29-32, wherein the mirror has a solar reflectance of at least 88%.
34. The mirror of any of embodiments 29-33, wherein a reflective layer of the mirror coating comprises silver or aluminum.
35. The mirror of any of embodiments 29-33, wherein, in the anti-soiling coating, the transparent conductive layer comprises ITO, the first dielectric layer comprises silicon oxynitride, and the second dielectric layer comprises silicon oxide.

## Claims

1. A concentrating solar power apparatus comprising:
a mirror for reflecting incident radiation from the sun to a common location in order to cause energy to be collected and/or generated due to radiation from the sun that is reflected by the mirror and is incident at the common location, wherein
the mirror comprises a glass substrate, an anti-soiling coating, and a mirror coating, and wherein the anti-soiling coating and the mirror coating are located on opposite sides of the glass substrate.

2. The concentrating solar power apparatus of claim 1, wherein the common location comprises at least one solar panel.

3. The concentrating solar power apparatus of any preceding claim, wherein the common location comprises a liquid to be heated so that the reflected sunlight heats the liquid and energy is collected from the heat and/or steam generated by the heated liquid.

4. The concentrating solar power apparatus of any preceding claim, wherein the mirror has a substantially parabolic shape.

5. The concentrating solar power apparatus of any preceding claim, wherein the mirror has a solar reflectance of at least 85 %, preferably of at least 88 %.

6. The concentrating solar power apparatus of any preceding claim, wherein a reflective layer of the mirror coating comprises silver, which is preferably sandwiched between first and second dielectric layers, or wherein a reflective layer of the mirror coating comprises aluminum, which is preferably sandwiched between first and second dielectric layers.

7. The concentrating solar power apparatus of any preceding claim, wherein the anti-soiling coating comprises a transparent conductive layer comprising ITO located between a first layer comprising silicon oxynitride and a second layer comprising an oxide and/or nitride of silicon, wherein the first layer comprising silicon oxynitride is located between at least the glass substrate and the transparent conductive layer comprising ITO, wherein the first layer comprising silicon oxynitride is preferably located between and directly contacting the glass substrate and the transparent conductive layer comprising ITO.

8. The concentrating solar power apparatus of -claim 7, wherein the second layer comprising an oxide and/or nitride of silicon comprises silicon oxide or silicon nitride.

9. The concentrating solar power apparatus of any of claims 1 - 6, wherein the anti-soiling coating comprises a transparent conductive layer comprising ITO located between at least first and second layers comprising silicon nitride- or, wherein the anti-soiling coating comprises a transparent conductive layer comprising silver located between at least first and second layers comprising silicon nitride.

10. The concentrating solar power apparatus of any of claims 1 - 6, wherein the anti-soiling coating also functions as an anti-reflective (AR) coating due to indices of refraction (n) of its respective layers, wherein the anti-soiling coating comprises a transparent conductive oxide layer having a refractive index (n) of from 1,8 to 2,0 that is sandwiched between and contacting a first dielectric layer having a refractive index (n) of from 1,65 to 1,85 and a second dielectric layer have a refractive index (n) of from 1,5 to 1,7, wherein the first dielectric layer is located between at least the transparent conductive oxide layer and the glass substrate, wherein the transparent conductive oxide layer preferably has an index of refraction (n) at least 0,1 higher than respective indices of the first and second dielectric layers and more preferably an index of refraction (n) at least 0,2 higher than respective indices of the first and second dielectric layers.

11. A mirror for use in a concentrating solar power apparatus, the mirror comprising:
a glass substrate,
an anti-soiling coating,
a mirror coating, wherein
the anti-soiling coating also functions as an anti-reflective (AR) coating due to indices of refraction (n) of its respective layers, wherein the anti-soiling coating comprises a transparent conductive oxide layer having a refractive index (n) of from 1,8 to 2,0 that is sandwiched between and contacting a first dielectric layer having a refractive index (n) of from 1,65 to 1,85 and a second dielectric layer have a refractive index (n) of from 1,5 to 1,7, wherein the first dielectric layer is located between at least the transparent conductive oxide layer and the glass substrate.

12. The mirror of claim 11, wherein the transparent conductive oxide layer has an index of refraction (n) at least 0,1 higher than respective indices of the first and second dielectric layers and preferably has an index of refraction (n) at least 0,2 higher than respective indices of the first and second dielectric layers.

13. The mirror of any of claims 11 - 12, wherein the anti-soiling coating and the mirror coating are located on opposite sides of the glass substrate.

14. The mirror of any of claims 11 - 13, wherein the mirror has a solar reflectance of at least 88 %.

15. The mirror of any of claims 11-14, wherein a reflective layer of the mirror coating comprises silver or aluminum.
